# EUROPÄISCHE PATENTANMELDUNG

(11) **EP 4 108 631 A1**
(43) Veröffentlichungstag der Anmeldung: **28.12.2022**
(21) Anmeldenummer: 22180153.3
(22) Anmeldetag: 21.06.2022
(51) Int. Cl.: C01B 32/05, B01D 39/00, C01B 32/205, C01B 32/21, C04B 35/536, E04C 2/10

(54) **VERFAHREN ZUR HERSTELLUNG VON KOHLENSTOFF- ODER GRAPHITSCHAUMTEILEN**

(30) Priorität: 24.06.2021 DE 102021116378; 06.12.2021 DE 102021132040
(71) Anmelder: Nippon Kornmeyer Carbon Group GmbH, 53578 Windhagen (DE)
(72) Erfinder: KORNMEYER, Torsten, 53639 Königswinter (DE); KLEIN, David, 53773 Hennef (Sieg) (DE); GERADS, Michael, 53119 Bonn (DE)
(74) Vertreter: Lippert Stachow Patentanwälte Rechtsanwälte Partnerschaft mbB

(57) **Zusammenfassung**

Verfahren zur Herstellung von Kohlenstoff- oder Graphitschaumteilen mit hohem Reinheitsgrad für Hochtemperatur-Isolierungen unter Vakuum oder Schutzgas, als Dämmmaterial oder als Filtermaterial. Die Aufgabe besteht darin, derartige hochreine Kohlenstoff- oder Graphitschaumteile kostengünstig und mit hoher Passgenauigkeit herzustellen. Erreicht wird das durch Einfüllen von trockener aufschäumbarer Stärke (1) in einen oben offenen Behälter (2) mit rundem oder eckigen Querschnitt bis der Boden (3) des Behälters (2) gleichmäßig mit Stärke (1) bedeckt ist, Einbringen des mit Stärke (1) teilgefüllten Behälters (2) in einen Ofen (4) und Aufheizen des Behälters (2) auf eine Aufschäumtemperatur von >180 °C über einen Zeitraum von mehreren Stunden zum Aufschäumen der Stärke (1), bis sich der Behälter (2) vollständig mit Kohlenstoffschaum (6) gefüllt hat, Entnehmen des Behälters (2) aus dem Ofen (4) und Herauslösen des Kohlenstoffschaumes (6) nach ausreichender Abkühlung und Portionieren des Kohlenstoffschaumes (6) zu Kohlenstoffschaumteilen (6.1).

## Beschreibung

Die Erfindung betrifft ein Verfahren zur Herstellung von Kohlenstoff- oder Graphitschaumteilen mit hohem Reinheitsgrad für Hochtemperatur-Isolierungen unter Vakuum oder Schutzgas, als Dämmmaterial, oder als Filtermaterial.

Es ist bekannt, dass ein Kohlenstoff- oder Graphitschaum aus synthetischen Harzen, wie Phenolharzen oder Urethanharzen hergestellt werden kann, indem diese Harze aufgeschäumt und aufgeheizt werden (US 3 121 050, US 3 342 555, US 3 302 999). Der Hauptnachteil eines solchen Kohlenstoffschaumes ist darin zu sehen, dass infolge einer niedrigen Carbonisierungsrate während des Aufheizens eine Schrumpfung des Harzschaumes um bis zu 75 % eintreten kann. Es ist also schwierig, passgenaue Kohlenstoff- oder Graphitschaumteile herzustellen. Außerdem sind Phenol- der Urethanharze das Ergebnis von chemischen Reaktionen mit teils giftigen oder gefährlichen Ausgangssubstanzen, wie Formaldehyd.

Um eine Schrumpfung beim Aufheizen zumindest zu reduzieren, kann dem Phenol- oder Urethanharzschaum Graphit oder Ruß hinzugefügt werden, was allerdings wegen der hohen Dichte der Additive, einen relativ schweren Harzschaum zur Folge hat.

In der DE 2 231 454 A wird deshalb vorgeschlagen, dem Phenol- oder Urethanharz hohle Kohlenstoffmikrokugeln beizufügen und die Mischung aufzuschäumen und den Schaum anschließend aufzuheizen, um eine Carbonisierung oder Graphitierung herbeizuführen. Das Ergebnis ist eine Verringerung der Schrumpfung und ein Kohlenstoff- oder Graphitschaum mit hoher Festigkeit.

Die Herstellung eines solchen Kohlenstoff- oder Graphitschaumes ist jedoch sehr aufwändig und teuer und somit für eine großtechnische Anwendung weniger geeignet.

Der Erfindung liegt die Aufgabe zugrunde, Kohlenstoff- oder Graphitschaumteile für Hochtemperatur-Isolierungen unter Vakuum oder Schutzgas, oder für Filteranwendungen, oder als Dämmmaterial, Flugzeugbau, oder in der Raumfahrt, kostengünstig und mit hoher Passgenauigkeit herzustellen.

Die der Erfindung zugrundeliegende Aufgabe wird bei einem Verfahren zur Herstellung von Kohlenstoff- oder Graphitschaumteilen für Hochtemperatur-Isolierungen unter Vakuum oder Schutzgas, als Dämmmaterial oder als Filtermaterial, gelöst durch

Einfüllen von trockener aufschäumbarer Stärke in einen oben offenen Behälter mit rundem oder eckigem Querschnitt bis der Boden des Behälters reichlich und gleichmäßig mit Stärke bedeckt ist,

Einbringen des mit Stärke teilgefüllten Behälters in einen Ofen und Aufheizen des Behälters auf eine Aufschäumtemperatur von mindestens etwa 170 °C über einen längeren Zeitraum von mehreren Stunden zum Aufschäumen der Stärke, bis sich der Behälter vollständig mit Kohlenstoffschaum gefüllt hat,

Entnehmen des mit Kohlenstoffschaum gefüllten Behälters aus dem Ofen und Herauslösen des Kohlenstoffschaumes nach ausreichender Abkühlung und

Portionieren des Kohlenstoffschaumes zu Kohlenstoffschaumteilen.

Im Ergebnis des Verfahrens entstehen bräunliche Kohlenstoffschaumteile mit ausreichender Formstabilität mit einer sehr geringen Menge an Restelementen, mit einem typischen Gehalt von Restelementen von < 20 ppm.

Mit diesem besonders einfach zu realisierenden Verfahren können beliebig große (bräunliche) Kohlenstoffschaumteile in Form von Würfeln oder Platten hergestellt werden. Diese Kohlenstoffschaumteile lassen sich auch einfach mechanisch bearbeiten (z.B. durch Sägen, Bohren usw.). Insbesondere Kohlenstoffschaumplatten lassen sich mit einem hohen quaderförmigen und oben offenen Behälter mit kleiner Grundfläche als Form besonders einfach herstellen.

Alternativ können natürlich auch mit dem erfindungsgemäßen Verfahren hergestellte Kohlenstoffschaumwürfel durch Sägen oder andere Bearbeitungsverfahren, wie Laser- oder Wasserstrahlschneiden, in Kohlenstoffschaumplatten oder andere Konstruktionsteile zerteilt oder umgeformt werden.

Bevorzugt wird für die Herstellung der Kohlenstoffschaumteile als Stärke Mais- oder Weizenstärke verwendet, wobei jedoch auch Tapiokastärke, Kartoffelstärke oder andere aufschäumbare Stärke, wie Reisstärke, verwendet werden kann, wobei Kohlenstoffschaumteile mit unterschiedlicher Konsistenz hergestellt werden können. Die hier zum Einsatz kommende pulverisierte Maisstärke sollte einen hohen Reinheitsgrad besitzen, wobei die Menge an Restelementen (Fremdelementen) ~300 ppm nicht überschreiten sollte.

Während des Aufschäumprozesses der Stärke im Ofen kann auch Wasserdampf zugeführt werden, um die End-Struktur der Kohlenstoffschaumteile zu beeinflussen, wobei der Wasserdampf einfach durch einen mit Wasser gefüllten Becher erzeugt werden kann, der während des Aufschäumprozesses mit in den Ofen gestellt wird.

Es ist zweckmäßig, die Form bis ca. 20 % mit Stärke zu füllen, um ein Überschäumen aus der Form zu vermeiden.

In einer Fortführung der Erfindung erfolgt das Aufschäumen der Stärke über einen Zeitraum von mehreren Stunden, z.B. mehr als 8 Stunden, bis sich die Form vollständig mit Schaum gefüllt hat.

In einer Ausgestaltung der Erfindung kann die Aufschäumtemperatur 200 °C und mehr betragen, wobei die Zeitdauer und die Temperatur einen Einfluss auf die Dichte der Kohlenstoffschaumteile haben, wobei höhere Temperaturen zu einem schaumigeren Zustand des Kohlenstoffschaumes führen.

Das Aufschäumen der Stärke, wie Weizenstärke, kann auch stufenweise ansteigend in einem Temperaturbereich von 170 °C bis 200 °C vorgenommen werden, vorzugsweise in 10 °C - Schritten, die jeweils über mehrere Stunden, wie jeweils bis 12 Stunden gehalten werden. Damit kann insbesondere Weizenstärke besonders homogen aufgeschäumt werden.

In einer besonderen Ausgestaltung der Erfindung werden die Kohlenstoffschaumteile in einer Nachbehandlung in einem Vakuumofen bei einer Temperatur ab 1.000 °C im Vakuum carbonisiert.

Die solcherart gefertigten Kohlenstoffschaumteile können bei einer Temperatur von 1.700 °C bis über 2.400 °C im Vakuum problemlos graphitiert werden.

Vorzugsweise erfolgt die thermische Behandlung der Kohlenstoffschaumteile zum Carbonisieren oder Graphitieren bei einem Druck von > 500 mbar, bevorzugt bei atmosphärischem Druck von ca. 1013 mbar.

Es ist von Vorteil, wenn die Kohlenstoffschaumteile vor der thermischen Behandlung zum Carbonisieren oder Graphitieren im Vakuumofen mit einer flachen Heizrampe auf ca. 500 °C vorgewärmt werden, um flüchtige Bestandteile vor der weiteren thermischen Behandlung zu verflüchtigen. Dadurch kann auch das Entstehen von Rissen in den Schaumstoffteilen vermieden werden.

Im Interesse einer besseren Handhabbarkeit können die Kohlenstoffschaumteile mit organischen Materialien, wie Papier, Backpapier oder Tuch belegt, oder alternativ oberflächlich mit einem PVA Klebstoff imprägniert werden.

Die bräunlichen Kohlenstoffschaumteile können auch mit Aluminiumfolie belegt werden, wobei in diesem Fall eine Weiterbehandlung durch Carbonisieren oder Graphitieren nicht möglich ist. Im Gegensatz dazu lassen sich die mit organischen Materialien belegten Kohlenstoffschaumteile thermisch weiterverarbeiten.

Die belegten oder imprägnierten Schaumstoffteile haben den Vorteil, dass bei deren Handhabung wenig oder kaum Abrieb entsteht.

Eine besondere Fortführung der Erfindung besteht darin, die graphitierten Kohlenstoffschaumteile in einem Ofen bei einer Temperatur von > 1.200 °C unter Zufuhr von SiO mit Argon als Trägergas bei einem Druck von 30 mbar problemlos in SiC-Schaumteile umzuwandeln. Die für diesen Prozess bevorzugte Umwandlungstemperatur liegt bei 1.520 °C oder höher bis ca. 1.600 °C.

Die solcherart hergestellten Kohlenstoff-, Graphit- oder SiC-Schaumteile sind als Dämmung für Gebäude, im Flugzeugbau oder in der Raumfahrt besonders geeignet, wobei auch eine Verwendung der Kohlenstoffschaumteile als Hochtemperatur-Dämmung unter Vakuum oder Schutzgas sehr gut möglich ist.

Die Erfindung wird nachfolgend an einem Ausführungsbeispiel näher erläutert. In den zugehörigen Zeichnungen zeigen:
- Fig. 1:: Einzelheiten des Verfahrensablaufes zur Herstellung von hochreinem Graphitschaum;
- Fig. 2:: eine in einer Form hergestellte Kohlenstoffschaumplatte mit den Abmessungen von z.B. 7x35x20 cm;
- Fig. 3:: die Struktur einer gesägten Graphitschaumplatte;
- Fig. 4:: eine Graphitschaumplatte mit einer dunkleren Struktur unten, welche der Bereich ist, in dem sich die Stärke am Anfang befand und einer darüber befindlichen Struktur im Bereich der Aufschäumung, wobei die kleine Abbildung rechts die Basisstruktur zeigt sowie den Aufschäumbereich (Pfeile);
- Fig. 5:: eine z.B. mit einer Aluminiumfolie belegte Graphitschumplatte; und
- Fig. 6:: einen Graphit ähnlichen Schaum nach einer Hochtemperaturbehandlung bei >2.000 °C.

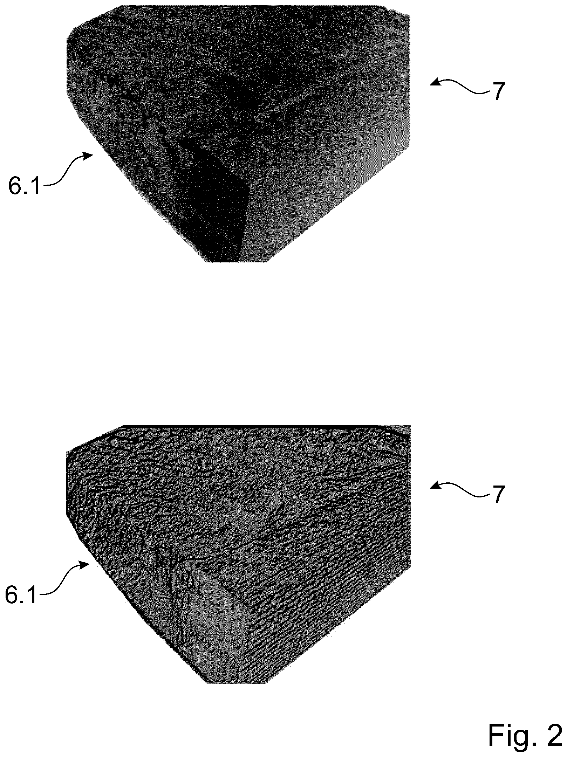

Die Fig. 2 - 6 enthalten jeweils zwei Abbildungen, nämlich eine Abbildung, die weitgehend dem Original entspricht und eine weitere Abbildung mit deutlicher Hervorhebung der Struktur.

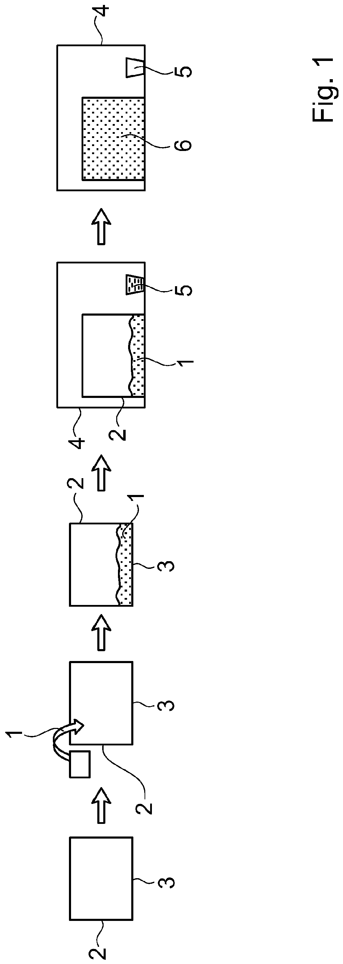

Die Herstellung von Kohlenstoff- oder Graphitschaumteilen mit hohem Reinheitsgrad für Hochtemperatur-Isolierungen unter Vakuum oder Schutzgas, als Dämmmaterial oder als Filtermaterial, erfolgt einfach durch Einfüllen von trockener aufschäumbarer Stärke 1 in einen oben offenen Behälter 2 (Form) mit rundem oder eckigen Querschnitt bis der Boden 3 des Behälters 2 reichlich und gleichmäßig mit Stärke 1 bedeckt ist, bis der Behälter mit Stärke 1 zu etwa 20 %, d. h. zwischen 10 % und 30 %, gefüllt ist. Bevorzugt wird für die Herstellung der Kohlenstoffschaumteile als Stärke Mais- oder Weizenstärke verwendet, wobei jedoch auch Tapiokastärke, Kartoffelstärke oder andere aufschäumbare Stärke basierte Materialien, wie Reisstärke, verwendet werden können. Fig. 1 zeigt Einzelheiten des Verfahrensablaufes zur Herstellung von Kohlenstoffschaum 6 mit hohem Reinheitsgrad.

Nachfolgend wird der mit Stärke 1 teilgefüllte Behälter 2 in einen Ofen 4 eingebracht und in diesem durch Aufheizen des Behälters 2 auf eine Aufschäumtemperatur von >180 °C gebracht, die über einen längeren Zeitraum von mehreren Stunden zum Aufschäumen der Stärke beibehalten wird, bis sich der Behälter 2 vollständig mit Kohlenstoffschaum 6 gefüllt hat.

Während des Aufschäumprozesses der Stärke 1 im Ofen 4 kann auch Wasserdampf zugeführt werden, um eine homogenere End-Struktur des Kohlenstoffschaumes 6 bzw. der daraus hergestellten Kohlenstoffschaumteile 6.1 zu erhalten, wobei der Wasserdampf einfach durch einen mit Wasser gefüllten Becher 5 erzeugt werden kann, der während des Aufschäumprozesses mit in den Ofen 4 gestellt wird.

Die Zeitdauer dieses Aufschäumprozesses ist insbesondere von der Größe des mit Kohlenstoffschaum 6 zu füllenden Behälters 2 abhängig und kann mehrere Stunden, ggf. bis zu 8 Stunden dauern.

Das Aufschäumen der Stärke, wie Weizenstärke, kann auch stufenweise ansteigend in einem Temperaturbereich von 170 °C bis 200 °C vorgenommen werden, vorzugsweise in 10 °C Schritten, die jeweils über mehrere Stunden, wie jeweils bis 12 h gehalten werden. Damit kann insbesondere Weizenstärke besonders homogen aufgeschäumt werden.

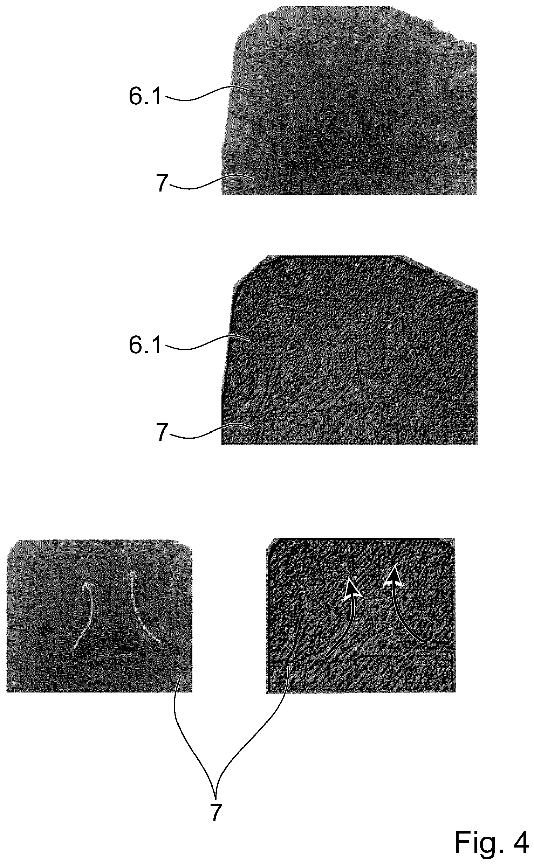

Fig. 4 zeigt anschaulich den Fortschritt des Aufschäumprozesses (vgl. die nach oben weisenden Pfeile, welche den Aufschäumbereich symbolisieren), wobei im unteren Bereich des Kohlenstoffschaumes 6 die ursprünglich in den Behälter 2 eingebrachte Stärke 1 als Basisstruktur 7 zu erkennen ist.

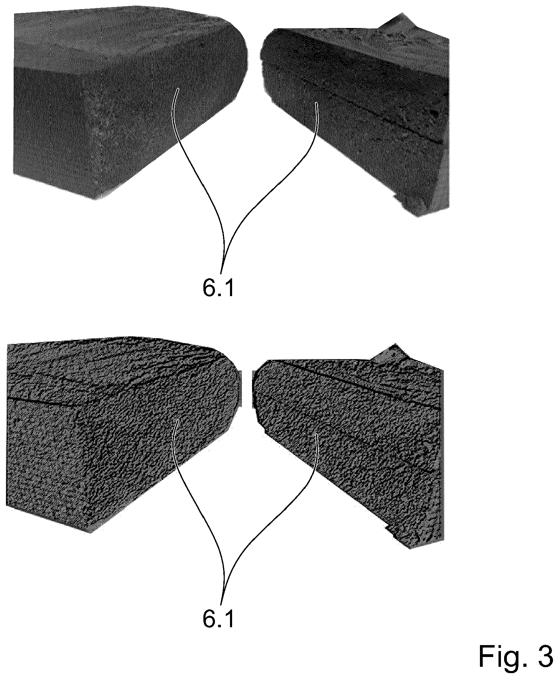

Der mit Kohlenstoffschaum 6 gefüllte Behälter 2 kann nach ausreichender Abkühlung aus dem Ofen 4 entnommen und das bräunliche Kohlenstoffschaumteil 6.1 aus dem Behälter 2 herausgenommen werden (Fig. 2). Anschließend kann das entnommene Kohlenstoffschaumteil 6.1 durch geeignete Schneidverfahren, wie Sägen, Wasserstrahlschneiden oder Laserstrahlschneiden, in beliebige Konstruktionsteile umgeformt werden (Fig. 3).

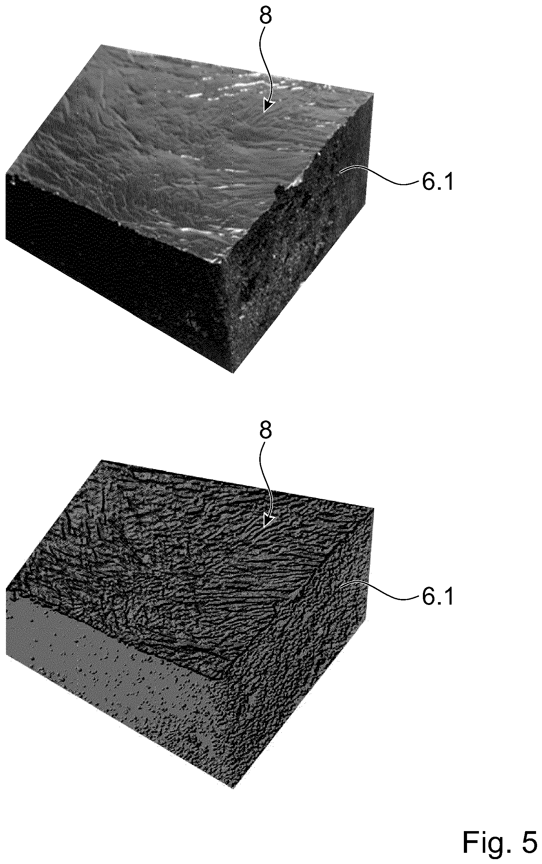

Im Interesse einer besseren Handhabbarkeit können die Kohlenstoffschaumteile 6.1 mit einer organischen Beschichtung 8, wie Papier, Backpapier, oder Kunststoff oder Tuch belegt, oder alternativ oberflächlich mit einem PVA Klebstoff imprägniert werden (Fig. 5).

Auch ist die Beschichtung 8 der bräunlichen Kohlenstoffschaumteile 6.1 mit Aluminiumfolie möglich, was allerdings eine thermische Weiterverarbeitung, wie Graphitieren, ausschließt, weil das Aluminium bei den hierfür erforderlichen Temperaturen schmelzen würde.

Der besondere Vorteil der belegten oder imprägnierten Kohlenstoffschaumstoffteile 6.1 ist darin zu sehen, dass bei deren Handhabung wenig oder kaum Abrieb entsteht, so dass die Kohlenstoffschaumteile 6.1 wesentlich besser handhabbar sind.

Die Beschichtung mit Aluminiumfolie kann auf besonders einfache Weise erfolgen, indem der Behälter 2 vor dem teilweisen Befüllen mit Stärke 1 zunächst mit Aluminiumfolie ausgekleidet wird, wobei beim Aufschäumen der Stärke 1 zugleich eine oberflächliche Verbindung zur Aluminiumfolie entsteht. Ein weiterer Vorteil ist darin zu sehen, dass das aufgeschäumte und mit Aluminiumfolie beschichtete Kohlenstoffschaumteil 6.1 leichter aus dem Behälter 2 entnommen werden kann, da die Aluminiumfolie zwar am Kohlenstoffschaumteil 6.1 anhaftet, nicht aber am Behälter 2.

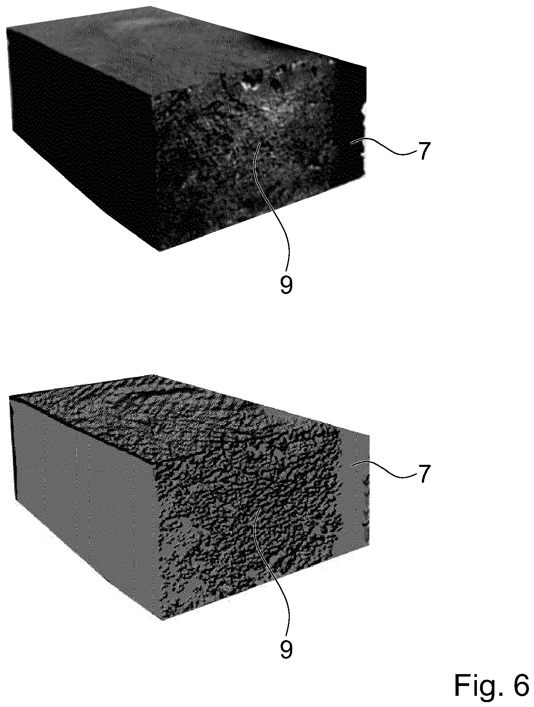

Ein Stabilisieren des Kohlenstoffschaumteiles 6.1 zu Graphitschaum 9 ist nicht notwendig, aber möglich. Dabei sollte das Graphitieren nicht unter zu hohem Vakuum erfolgen, weil das Kohlenstoffschaumteil 6.1 sonst platzen könnte, wobei gleichzeitig eine langsame Heizrampe bis zum Erreichen der Graphitierungstemperatur von Vorteil ist. Fig. 6 zeigt einen Graphitschaumteil 9 nach einer Hochtemperaturbehandlung bei >2.000 °C unter Vakuum.

Im Kohlenstoffschaumteil 6.1 können beim Graphitieren Risse oder Brüche entstehen, wenn Gas aus dem Material herausdiffundiert, wobei die Gase unter Vakuum schneller ausdiffundieren. Auf jeden Fall ist die Gefahr des Entstehens von Rissen oder Brüchen unter Vakuum größer als bei einem höheren Druck.

Aus diesem Grund erfolgt das Graphitieren bei einem Druck von >500 mbar, z.B.bei 750 mbar, bei dem die Struktur stabil ist, wobei auch ein höherer Druck, wie Normaldruck bei 1013 mbar von Vorteil sein kann und bei einer Temperatur ab 1000 °C (Carbonisierung) und bei einer Temperatur von 1.700 °C bis über 2.400 °C (Graphitierung) erfolgt.

Die auf diese Weise hergestellten Graphitschaumplatten 9 können ebenfalls mit verschiedenen Beschichtungen 8, wie Aluminiumfolie oder Papier, Backpapier, Tuch, Kunststofffolie belegt, oder auch mit einem PVA Klebstoff (Holzleim) imprägniert werden.

Die nach dem beschriebenen Verfahren hergestellten Kohlenstoffschaumteile 6.1 oder die carbonisierten Kohlenstoffschaumteile oder die Graphitschaumteile 9 sind für eine Reihe von Anwendungsfällen geeignet.

So sind die erfindungsgemäß hergestellten Kohlenstoffschaumteile 6.1 oder die Graphitschaumteile 9 in Form von Platten sehr gut zur Verwendung als Dämmung für Gebäude o.dgl. geeignet.

Wird die für die Herstellung der Kohlenstoffschaumteile 6.1 verwendete Form mit Alufolie ausgekleidet und anschließend der Kohlenstoffschaum 6 darin hergestellt, klebt die Aluminiumfolie fest auf dem Schaum.

Die erfindungsgemäß hergestellten Kohlenstoffschaumteile 6.1 können nach der Carbonisierung als Hochtemperatur-Dämmung unter Vakuum oder Schutzatmposphäre eingesetzt werden.

Nach dem Graphitieren des Kohlenstoffschaumteiles 6.1 lässt sich dieses auch gut in ein Siliziumcarbidschaumteil umwandeln, das nach der Umwandlung in SiC bei Temperaturen von bis zu etwa 1.500 °C in einer oxidierenden Atmosphäre eingesetzt werden kann.

Das Umwandeln in SiC erfolgt in einem Ofen 4 bei einer Temperatur von > 1.200 °C unter Zufuhr von gasförmigem SiO mit Argon als Trägergas bei einem Druck von 30 mbar wodurch sich SiC bildet. Die für diesen Prozess bevorzugte Temperatur liegt bei 1.520 °C.

Das Umwandeln der Graphitschaumteile 9 in SiC-Schaumteile kann auch bei einem hohen Druck, wie 950 mbar erfolgen. Der aktuell genutzte Druck hat einen Enfluss auf die Homogenität und Geschwindigkeit der Umwandlung.

Die Vorteile der SiC-Schaumteile sind darin zu sehen, dass diese einfach und kostengünstig aus dem Graphitschaumteil 9 herzustellen sind, dass sie gute Dämmwerte als Isolierungsmaterial besitzen und dass sie sich leicht bearbeiten lassen.

Der besondere Vorteil von Graphitschaumteilen 9 oder SiC-Schaumteilen ist darin zusehen, dass sie feuerfest sind und dass für die Herstellung der SiC-Schaumteile organische Rohmaterialien verwendet werden.

Ein Nachteil der SiC-Schaumteile ist darin zu sehen, dass diese leicht bröseln, was aber durch eine geeignete Beschichtung wie beschrieben, umgangen werden kann.

Die Siliziumcarbid(SiC)-Schaumteile sind vielfältig einsetzbar, nämlich als Dämmstoff für Gebäude, als Isolation für Hochtemperaturanlagen bis ca. 2.500 °C unter Vakuum / Inertgas und bis 1.500 °C unter oxidativer Atmosphäre, wohingegen Graphitschaum unter Vakuum / Inertgas (Argon) bis ca. 3.000 °C einsetzbar ist.

Weiterhin sind die Siliziumcarbid-Schaumteile wegen des geringen Gewichtes für die Verwendung als Dämmmaterial für die Flug- und Raumfahrt besonders geeignet.

Graphitschaumteile 9 sind wegen der Hochporigkeit auch als Filter gut geeignet.

### Bezugszeichenliste

- 1: Stärke
- 2: Behälter (Form)
- 3: Boden
- 4: Ofen
- 5: Becher
- 6: Kohlenstoffschaum
- 6.1: Kohlenstoffschaumteil
- 7: Basisstruktur
- 8: Beschichtung
- 9: Graphitschaumteil

## Patentansprüche

1. Verfahren zur Herstellung von Kohlenstoff- oder Graphitschaumteilen mit hohem Reinheitsgrad für Hochtemperatur-Isolierungen unter Vakuum oder Schutzgas, als Dämmmaterial oder als Filtermaterial, **gekennzeichnet durch**
Einfüllen von trockener aufschäumbarer Stärke (1) in einen oben offenen Behälter (2) mit rundem oder eckigem Querschnitt, bis der Boden (3) des Behälters (2) reichlich und gleichmäßig mit Stärke (1) bedeckt und der Behälter 2 zu mehr als 10 % gefüllt ist,
Einbringen des mit Stärke (1) teilgefüllten Behälters (2) in einen Ofen (4) und Aufheizen des Behälters (2) auf eine Aufschäumtemperatur von >180 °C über einen längeren Zeitraum von mehreren Stunden zum Aufschäumen der Stärke (1), bis sich der Behälter (2) vollständig mit Kohlenstoffschaum (6) gefüllt hat,
Entnehmen des Behälters (2) aus dem Ofen (4) und Herauslösen des Kohlenstoffschaumes (6) nach ausreichender Abkühlung und
Portionieren des Kohlenstoffschaumes (6) zu Kohlenstoffschaumteilen (6.1).

2. Verfahren nach Anspruch 1, **dadurch gekennzeichnet, dass** als Stärke (1) Maisstärke, Tapiokastärke, Weizenstärke, Reisstärke oder Kartoffelstärke verwendet wird.

3. Verfahren nach Anspruch 1, **dadurch gekennzeichnet, dass** während dem Aufschäumprozess der Stärke (1) im Ofen (4) Wasserdampf zugeführt wird.

4. Verfahren nach Anspruch 1, **dadurch gekennzeichnet, dass** der Behälter (2) zu 10 % bis 30 % mit Stärke (1) gefüllt wird.

5. Verfahren nach Anspruch 1, **dadurch gekennzeichnet, dass** das Aufschäumen der Stärke (1) über einen Zeitraum von mehr als 8 Stunden vorgenommen wird.

6. Verfahren nach Anspruch 1, **dadurch gekennzeichnet, dass** die Aufschäumtemperatur für die Stärke (1) 200 °C und mehr beträgt.

7. Verfahren nach einem der Ansprüche 1 bis 6, **dadurch gekennzeichnet, dass** das Aufschäumen stufenweise ansteigend in einem Temperaturbereich von 170 °C bis 200 °C vorgenommen wird, vorzugsweise in 10 °C - Schritten, jeweils über mehrere Stunden, wie jeweils bis 12 Stunden.

8. Verfahren nach einem der Ansprüche 1 bis 7, **dadurch gekennzeichnet, dass** die Kohlenstoffschaumteile (6.1) bei einer Temperatur von ab 1.000 °C im Vakuum carbonisiert werden.

9. Verfahren nach einem der Ansprüche 1 bis 7, **dadurch gekennzeichnet, dass** die Kohlenstoffschaumteile (6.1) bei einer Temperatur von 1.700 °C bis über 2.400 °C graphitiert werden.

10. Verfahren nach Anspruch 9, **dadurch gekennzeichnet, dass** die thermische Behandlung der Kohlenstoffschaumteile (6.1) zum Graphitieren bei einem Druck von > 500 mbar, bevorzugt bei Normaldruck, erfolgt.

11. Verfahren nach Anspruch 10, **dadurch gekennzeichnet, dass** die Kohlenstoffschaumteile (6.1) vor der thermischen Behandlung zum Graphitieren mit einer flachen Heizrampe in einem Vakuumofen auf nicht mehr als 500 °C vorgewärmt werden, um flüchtige Bestandteile während der thermischen Behandlung zu verflüchtigen.

12. Verfahren nach einem der Ansprüche 9 bis 11, **dadurch gekennzeichnet, dass** die graphitierten Kohlenstofffschumteile (6.1) in einem Ofen (4) bei einer Temperatur von > 1.200 °C unter Zufuhr von SiO mit Argon als Trägergas bei einem Druck von 30 mbar in SiC umgewandelt werden.

13. Verfahren nach Anspruch 12, **dadurch gekennzeichnet, dass** die Umwandlungstemperatur bei ca. 1.600 °C liegt.

14. Verfahren nach einem der Ansprüche 1 bis 13, **dadurch gekennzeichnet, dass** die Kohlenstoffschaumteile (6.1) mit Folien, wie Aluminiumfolie oder Papier, Backpapier oder Tuch belegt sind.

15. Verfahren nach einem der Ansprüche 1 bis 13, **dadurch gekennzeichnet, dass** die Kohlenstoffschaumteile (6.1) mit einem PVA Klebstoff imprägniert werden.

16. Verwendung der Kohlenstoffschaumteile (6.1) oder der Graphitschaumteile (9) nach einem der Ansprüche 1 bis 12 als Dämmung.

17. Verwendung der Kohlenstoffschaumteile (6.1) oder der Graphitschaumteile (9) nach einem der Ansprüche 1 bis 12 als Hochtemperatur-Dämmung unter Vakuum oder Schutzgas.
